# EUROPÄISCHE PATENTSCHRIFT

(11) **EP 2 046 623 B1**
(45) Veröffentlichungstag und Bekanntmachung des Hinweises auf die Patenterteilung: **23.11.2011**
(21) Anmeldenummer: 07786191.2
(22) Anmeldetag: 19.07.2007
(51) Int. Cl.: B62D 5/06

(54) **SYSTEM MIT EINEM VERDICHTER UND EINEM VERBRAUCHER IN EINEM KRAFTFAHRZEUG**
SYSTEM WITH A COMPRESSOR AND WITH A CONSUMER IN A MOTOR VEHICLE
SYSTEMÉ COMPRENANT UN COMPRESSEUR ET UNE CHARGE DANS UN VÉHICULE AUTOMOBILE

(30) Priorität: 19.07.2006 DE 102006033428
(43) Veröffentlichungstag der Anmeldung: 15.04.2009
(73) Patentinhaber: KNORR-BREMSE Systeme für Nutzfahrzeuge GmbH, 80809 München (DE)
(72) Erfinder: GERUM, Eduard, 83026 Rosenheim (DE)
(74) Vertreter: Mattusch, Gundula
(86) Internationale Anmeldenummer: PCT/EP2007/006421
(87) Internationale Veröffentlichungsnummer: WO 2008/009446

(56) Entgegenhaltungen:
- EP-A- 1 103 741
- EP-A- 1 342 920
- WO-A1-2005/042976
- JP-A- 2000 045 814
- JP-U- 1 160 180
- US-A- 5 195 479
- US-A- 5 983 780

## Beschreibung

Die Erfindung betrifft ein System mit einem Verdichter und einem Verbraucher, die an einen Antriebsstrang gekoppelt sind und aus diesem Energie beziehen, wobei der Verdichter im Betrieb einen Expansionstakt und einen Verdichtungstakt ausführt. Weiterhin betrifft die Erfindung eine Pumpe, die zumindest eine während eines Pumpenbetriebs eine Pumpleistung erbringende Pumpenkammer aufweist, wobei die Pumpe weiterhin zumindest eine Pumpenkammer aufweist, die während des Pumpenbetriebes keine Pumpleistung erbringt, und wobei die Pumpe einen im Inneren der Pumpe angeordneten Rotor und einen eine Ausstoßöffnung und eine Ansaugöffnung aufweisenden Stator umfasst.

In Kraftfahrzeugen finden Systeme mit Verdichtern beziehungsweise Kompressoren häufig Anwendung. So werden Verdichter beispielsweise zur Druckluftbeschaffung für Bremsen, Luftfederung, Getriebe, etc. verwendet. In der Regel wird der Verdichter von einem Verbrennungsmotor des Kraftfahrzeugs über einen Antriebsstrang angetrieben, der mittels einer Kupplungseinrichtung zur Entlastung des Verbrennungsmotors unterbrochen werden kann, wenn die Randbedingungen dies erlauben.

weiterhin sind moderne Kraftfahrzeuge meist mit einer Lenkhilfeeinrichtung, auch Servolenkung genannt, ausgestattet, die im Wesentlichen aus einer Lenkhilfepumpe oder Hydraulikpumpe, wie beispielsweise einer Ölpumpe, und einem Hydraulikkreis besteht, über den die Hydraulikpumpe einen Hydraulikdruck einer mit einem Lenkgestänge gekoppelten Lenkhiltevorricntung zuführt. Hierdurch wird eine Hilfskraft erzeugt, die mittels geeigneter mechanischer Mittel am Lenkrad unterstützend aufgebracht wird. Die Hydraulikpumpe wird häufig mittelbar, d.h. indirekt, von dem Antriebsstrang des Verbrennungsmotors angetrieben. Zum Beispiel ist der Verdichter in dem Antriebsstrang zwischen dem Verbrennungsmotor und der Hydraulikpumpe angeordnet, wobei der Verdichter wiederum die Hydraulikpumpe als Verbraucher antreibt.

Allgemein zeigen Verdichter einen ungleichmäßigen Verlauf des für den Verdichterbetrieb erforderlichen Antriebsdrehmoments beziehungsweise der für den Verdichterbetrieb erforderlichen Antriebsleistung, wobei das Antriebsmoment beziehungsweise die Antriebsleistung von dem Verbrennungsmotor zur Verfügung gestellt werden. Beispielsweise, wenn der Verdichter einen Verdichtungsvorgang beziehungsweise einen Verdichtungstakt ausführt, ist das für den Verdichterbetrieb erforderliche Antriebsdrehmoment im Vergleich zu einem Expansionsvorgang beziehungsweise Expansionstakt besonders hoch. Dies ist vor allem bei Kolbenverdichtern mit zumindest einem Zylinder festzustellen. Das bei dem Verdichtungsvorgang für den Verdichterbetrieb erforderliche Antriebsdrehmoment beziehungsweise die dafür erforderliche Antriebsleistung steigt mit dem Fortschreiten des Kolbens in Richtung des oberen Totpunkts im Zylinder an und erreicht schließlich, im einem Bereich nahe des oberen Totpunkts, einen Spitzenwert, nachstehend als Drehmomentspitze oder Leistungsspitze bezeichnet. Durch die Drehmomentspitze werden Rückwirkungen auf den Verbrennungsmotor, beispielsweise auf den Rädertrieb des Verbrennungsmotors, hervorgerufen. Ebenso können Störungen des präzisen Laufes der Nockenwelle verursacht werden. Daher wird ein konstanter beziehungsweise gleichmäßiger Verlauf des Drehmoments beziehungsweise der Leistung angestrebt, das beziehungsweise die der Verbrennungsmotor zur Verfügung stellt.

Ferner ist ein erhöhtes Antriebsdrehmoment beziehungsweise eine erhöhte Antriebsleistung des Verbrennungsmotors erforderlich, wenn zusätzlich zu dem Verdichter eine Lenkhilfepumpe oder Hydraulikpumpe angetrieben werden muss, die sich in dem gleichen Antriebsstrang des Verdichters befindet. Ebenso muss die in dem Antriebsstrang des Verbrennungsmotors vorgesehene Kupplungseinrichtung entsprechend dem maximal übertragenen Antriebsdrehmoment bzw. der maximal zugeführten Antriebsleistung des Verbrennungsmotors ausgelegt werden.

Aus der Druckschrift JP 2000 045814 A, die ein System nach dem Oberbegriff des Anspruchs 1 offenbart, ist ein Klimasteuergerät für ein Hybridfahrzeug bekannt, das beispielsweise die Generation elektrischer Energie mit dem elektrischen Motor/Generator entsprechend der Leistungsaufnahme der Klimaanlage herunterregelt, um die erforderliche Leistung des Verbrennungsmotors nicht zu beeinflussen. Somit ist aus dieser Druckschrift die Ansteuerung eines Verbrauchers zur Variation der Leistungsaufnahme des Verbrauchers während des Betriebs eines Verdichters der Klimaanlage bekannt.

Aus der Druckschrift US 5,983,780 A ist ein Kompressor bekannt, dessen Verdichtungsleistung durch entsprechende Auslegung der Kompressorkammern variiert wird.

Die WO 2005/042976 A, die eine Pumpe nach dem Oberbegriff des Anspruchs 7 zeigt, offenbart eine Pumpe mit zwei Pumpenkammern, wobei eine erste Pumpenkammer eine Pumpleistung erbringt, während eine zweite Pumpenkammer über eine Ventileinrichtung schaltbar mit einem Saugschlitz verbindbar ist. Hierdurch besteht insbesondere die Möglichkeit, den Volumenstrom der zweiten Pumpenkammer wahlweise zu- und abzuschalten.

Es ist daher die Aufgabe der vorliegenden Erfindung, das gattungsgemäße System weiter im Hinblick auf die Belastung der im Antriebsstrang angeordneten Komponenten zu verbessern.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Das erfindungsgemäße System baut auf dem gattungsgemäßen Stand der Technik dadurch auf, dass der Verbraucher Mittel umfasst, die dazu vorgesehen sind, eine Aufnahme einer ihm von dem Antriebsstrang zur Verfügung gestellten Leistung in Abhängigkeit von einer für einen Verdichterbetrieb erforderlichen, von dem Antriebsstrang dem Verdichter zugeführten Leistung im Verdichtungstakt abzusenken, wenn die für den Verdichterbetrieb erforderliche Leistung im Verdichtungstakt einen Schwellenwert übersteigt oder eine Leistungsspitze erreicht, so dass ein Verlauf der Gesamtleistung aus der für den Verdichterbetrieb erforderlichen Leistung und der durch den Verbraucher aufgenommenen Leistung während eines Verdichtungstaktes des Verdichters im Wesentlichen konstant ist. Dies ist besonders vorteilhaft, da der Verdichter grundsätzlich im Verdichterbetrieb einen sehr ungleichmäßigen Verlauf der für den Verdichterbetrieb erforderlichen Antriebsleistung beziehungsweise des für den Verdichterbetrieb erforderlichen Antriebsdrehmoments hat. Durch entsprechendes variieren der Leistungsaufnahme des Verbrauchers wird dieser ungleichmäßige Verlauf insgesamt kompensiert. Dies rührt daher, dass das in dem Antriebsstrang zur Verfügung gestellte Gesamtdrehmoment beziehungsweise die in dem Antriebsstrang zur Verfügung gestellte Gesamtleistung eine Überlagerung aus dem beziehungsweise der für den Verdichterbetrieb erforderlichen Antriebsmoment Antriebsleistung und dem beziehungsweise der von dem Verbraucher aufgenommenen Drehmoment beziehungsweise Leistung ist. Somit können eventuelle Rückwirkungen aufgrund von Drehmomentschwankungen oder Drehmomentspitzen auf den Antriebstrang, der beispielsweise von einem Verbrennungsmotor abgezweigt ist, vermieden werden. Die Abhängigkeit der Leistungsaufnahme des Verbrauchers von der für einen Verdichterbetrieb erforderlichen Leistung, die dem Verdichter zugeführt wird, ist insofern von Vorteil, als eine in dem Antriebsstrang zur Verfügung gestellte Leistung, wie beispielsweise ein zeitlicher Verlauf einer Gesamtleistung, durch geeignete Variation der Leistungsaufnahme des Verbrauchers positiv beeinflusst werden kann.

Darüber hinaus kann das erfindungsgemäße System dadurch weitergebildet sein, dass der Verbraucher geeignet ist, seine Aufnahme der ihm zur Verfügung gestellten Leistung zu verringern, wenn ein Verlauf der für den Verdichterbetrieb erforderlichen Leistung über einen vorbestimmten Schwellenwert ansteigt oder einen Bereich eines Leistungsmaximums erreicht. Durch Festlegung des Schwellenwerts wird verhindert, dass der Gesamtdrehmomentverlauf beziehungsweise der Gesamtleistungsverlauf in dem Antriebsstrang einen maximal zulässigen Wert überschreitet, wobei gleichzeitig eine Leistungsspitze beziehungsweise eine Drehmomentspitze in dem Antriebsstrang vermieden wird. Die Höhe des Schwellenwerts wird dabei derart festgelegt, dass vorteilhafterweise Rückwirkungen auf den Antriebsstrang, beispielsweise auf einen in dem Antriebsstrang befindlichen Verbrennungsmotor, weitestgehend unterbunden werden.

Ferner kann das erfindungsgemäße System derart weitergebildet sein, dass die für den Verdichterbetrieb erforderliche Leistung in einem Verdichtungsvorgang oder einem Verdichtungstakt den Schwellenwert übersteigt oder ihr Leistungsmaximum erreicht. Insbesondere bei einem Verdichtungsvorgang kann ein sehr hohes Drehmoment beziehungsweise eine sehr hohe Antriebsleistung zum Antreiben des Verdichters erforderlich sein. Das hohe Antriebsdrehmoment, das eine sehr hohe Drehmomentspitze kurz vor

Erreichen des oberen Totpunkts bei Kolbenkompressoren erreicht, kann wie vorstehend erwähnt kompensiert werden. Daher ist es besonders vorteilhaft, die Leistungsaufnahme des Verbrauchers genau dann zu verringern, wenn der Verdichter seinen Verdichtungsvorgang, insbesondere kurz vor Erreichen des oberen Totpunkts, ausführt, um einen gleichmäßigen Gesamtleistungsverlauf beziehungsweise Gesamtdrehmomentverlauf in dem Antriebstrang zu gewährleisten.

Das erfindungsgemäße System kann weiterhin so ausgebildet sein, dass der Verbraucher eine Pumpe, insbesondere eine Lenkhilfepumpe oder eine Hydraulikpumpe, umfasst, die geeignet ist, einen eine Pumpleistung erbringenden Betrieb, bei dem die Aufnahme der zur Verfügung gestellten Leistung erfolgt, und einen keine oder in Abhängigkeit von Betriebseigenschaften des Verdichters verringerte Pumpleistung erbringenden Betrieb, bei dem keine oder eine verringerte Aufnahme der zur Verfügung gestellten Leistung erfolgt, auszuführen. Anhand dieser Weiterbildung wird die in dem Antriebstrang befindlich Pumpe, die üblicherweise einen gleichmäßigen Drehmomentverlauf beziehungsweise Leistungsverlauf hat, an den Verlauf der für den Verdichterbetrieb erforderlichen, zugeführten Leistung angepasst, um den vorstehend erwähnten konstanten Verlauf der Gesamtleistung zu erzielen.

In einer bevorzugten Ausführungsform ist das erfindungsgemäße System derart gestaltet, dass die Pumpe eine Verdrängungspumpe, insbesondere eine Flügelzellenpumpe oder eine Kolbenpumpe, umfasst, bei der zumindest eine keine oder in Abhängigkeit von Betriebseigenschaften des Verdichters verringerte Pumpleistung erbringende Pumpenkammer ausgebildet ist, mit der in einem Pumpenbetrieb keine oder eine verringerte Aufnahme der zur Verfügung gestellten Leistung erfolgt, wobei die Pumpe weiterhin zumindest eine eine Pumpleistung erbringende Pumpenkammer aufweist, mit der in einem Pumpenbetrieb die Aufnahme der zur Verfügung gestellten Leistung erfolgt. Durch diese Ausgestaltung der Pumpe wird ermöglicht, dass durch konstruktive Maßnahmen an den Pumpenkammern die vorstehend genannten unterschiedlichen Betriebe ausgeführt werden können. So ist denkbar, dass die Flügelzellenpumpe mehr als 6 Pumpenkammern aufweist, wovon ein Teil der Kammern in einen Zustand des "nicht Pumpens" versetzt werden kann, um die Leistungsaufnahme während des Betriebs dieser Pumpenkammer zu verringern und damit die vorstehend genannte Kompensation des Spitzenmoments zu erreichen. Dies kann zum Beispiel durch ein vergrößertes Kammervolumen bei einer Flügelzellenpumpe erfolgen, welches zum Beispiel im Falle der Flügelzellenpumpe durch Umgestaltung des Rotors vergrößert werden kann, d.h. anhand eines einseitig bezüglich der Rotorlängsachse abflachten Rotors, der an der abgeflachten Seite die keine Pumpleistung erbringende Pumpenkammer zum Teil ausbildet. Ebenso ist aber auch eine Gestaltung einer eine verringerte Pumpleistung erbringende Pumpenkammer denkbar, deren Pumpleistungsvermögen von diversen Faktoren abhängig gemacht wird. Darüber hinaus sind auch andere Maßnahmen denkbar, die einen Pumpleistung erbringenden Betrieb der entsprechenden Kammer(n) verhindern. So kann beispielsweise bei Kolbenpumpen mit mehreren Zylindern, insbesondere bei einer Taumelscheibenkolbenpumpe, der Wegfall von einem oder mehr Kolben eine Pumpleistung für diese entsprechende Kammer unterbinden.

Das erfindungsgemäße System kann außerdem dadurch weitergebildet werden, dass der Verdichter von einem Antriebstrang eines Verbrennungsmotors und der Verbraucher von einem Antriebsstrang des Verdichters angetrieben werden, wobei optional eine Kupplungseinrichtung in dem Antriebsstrang des Verbrennungsmotors angeordnet ist. Diese Weiterbildung erweist sich als besonders vorteilhaft, da der Verbrennungsmotor dem Verdichter einen konstanten Verlauf des Antriebsdrehmoments beziehungsweise einen konstanten Verlauf der Antriebsleistung zur Verfügung stellt, ohne dass Antriebsdrehmomenterhöhungen aufgrund des Verdichtungsvorgangs auftreten, wodurch Probleme im Rädertrieb des Motors und Störungen des präzisen Laufes der Nockenwelle aufgrund der Kompensation der Drehmomentspitze vermieden werden können. Ebenso ermöglicht das erfindungsgemäße System bei Einsatz einer Kupplungseinrichtung, wie einer Abschaltkupplung, deren Verkleinerung und damit die Senkung der dafür anfallenden Kosten, da die Kupplungseinrichtung für das maximale Antriebsdrehmoment des Verdichters beziehungsweise die Drehmomentspitze ausgelegt wird. Es sei angemerkt, dass die hier erwähnte Anordnung einer Reihenanordnung von Motor, Verdichter und Verbraucher entspricht. Allerdings sind ebenso eine Parallelanordnung von Verdichter und Verbraucher oder sonstige Anordnungen denkbar, solange diese an den gleichen Antriebsstrang gekoppelt sind.

Die erfindungsgemäße Pumpe baut auf dem Stand der Technik dadurch auf, dass die während des Pumpbetriebs keine Pumpleistung erbringende Pumpenkammer rotorseitig von dem in diesem Bereich einen abgeflachten Abschnitt aufweisenden Rotor begrenzt wird, dass der Rotor keine Berührung mit dem Stator zwischen der Ausstoßöffnung und der Ansaugöffnung herstellt, wenn der abgeflachte Abschnitt des Rotors der Ausstoßöffnung und der Ansaugöffnung zugewandt ist. Sinngemäß gelten hierfür die in Zusammenhang mit der Lenkhilfepumpe beziehungsweise Hydraulikpumpe genannten Vorteile.

Eine bevorzugte Ausführungsform der Erfindung wird nachfolgend anhand der Figuren beispielhaft erläutert.

Es zeigen:
- Figur 1: eine schematische Darstellung des erfindungsgemäßen Systems; und
- Figur 2: eine besondere Ausführungsform des Verbrauchers gemäß Figur 1.

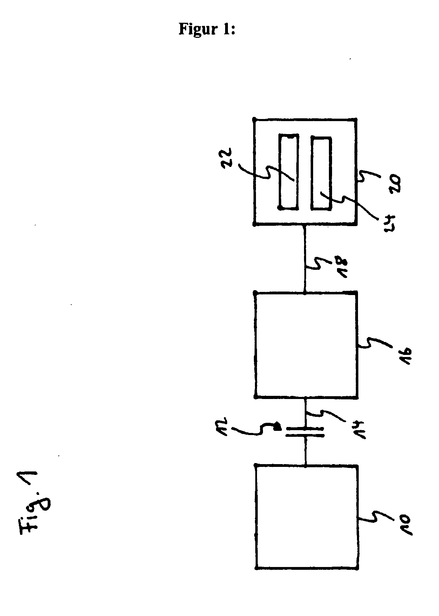

Figur 1 zeigt eine schematische Darstellung des erfindungsgemäßen Systems. Ein Verbrennungsmotor 10 eines Kraftfahrzeugs ist mit einem Verdichter oder Kompressor 16 über einen Antriebsstrang 14 gekoppelt. Der Verdichter 16 ist beispielsweise zur Druckluftbeschaffung für unterschiedliche, nicht näher erwähnte Komponenten in dem Kraftfahrzeug vorgesehen.

Eine Abschaltkupplung bzw. eine Kupplungseinrichtung 12 ist in dem Antriebsstrang 14 zwischen dem Verbrennungsmotor 10 und dem Verdichter 16 angeordnet. Die Kupplungseinrichtung 12 dient zur Ankopplung des Verdichters 16 an den Verbrennungsmotor 10 und zur Abkopplung von diesem. Beispielsweise wird der Verdichter 16 von dem Antriebsstrang 14 des Verbrennungsmotors 10 abgekoppelt, wenn ein Betrieb des Verdichters 16 nicht weiter erforderlich ist und die Fahrzeugbedingungen bsw. Randbedingungen dies erlauben.

Der Verdichter 16 kann in besonderen Ausführungen ein Hubkolbenkompressor mit einem oder mehreren Zylindern sein; es sind aber ebenso andere Bauarten denkbar.

Weiterhin ist der Verdichter 16 mit einem Verbraucher 20 über einen Antriebsstrang 18 gekoppelt. Der Verbraucher 20 ist in dieser Ausführung eine Lenkhilfepumpe oder eine Hydraulikpumpe, die einer Servolenkung beziehungsweise einer Lenkhilfeeinrichtung zugeordnet ist. Insbesondere kann die Hydraulikpumpe eine Verdrängungspumpe, wie beispielsweise eine Flügelzellenpumpe oder eine Kolbenpumpe sein. Die Hydraulikpumpe weist zwei in Figur 1 schematisch dargestellte Pumpenkammern 22 und 24 auf. Die Pumpenkammer 24 ist eine eine Pumpleistung erbringende Pumpenkammer, mit der ein Fluid in einem Hydraulikkreis (nicht gezeigt) der Lenkhilfeeinrichtung gefördert wird. Sofern diese Pumpenkammer 24 in Betrieb ist, nimmt die Pumpe eine Antriebsleistung von dem Verdichter 16 über den Antriebsstrang 18 auf. Die Pumpenkammer 22 hingegen ist in dieser Ausführungsform derart ausgebildet, dass sie keine Pumpleistung erbringt. Sofern diese Pumpenkammer 22 in Betrieb ist, nimmt die Pumpe keine Antriebsleistung von dem Verdichter 16 über den Antriebsstrang 18 auf.

Alternativ kann die Pumpleistung dieser Pumpenkammer 22 auch verringert sein und muss nicht auf nahezu Null festgelegt werden. Das Ausmaß der Verringerung der Pumpleistung kann beispielsweise in Abhängigkeit des verwendeten, Im Antriebstrang des Verbrennungsmotors 10 befindlichen Verdichters 16 oder auch anderer dort angeordneter Komponenten festgelegt werden. Somit hängt das Ausmaß der Verringerung der Pumpleistung der Pumpenkammer 22 von diversen Faktoren wie beispielsweise den Betriebseigenschaften (Drehmomentverlauf etc.) des Verdichters 16 beziehungsweise der anderen Komponenten ab.

In Figur 1 sind lediglich zwei unterschiedliche Pumpkammern gezeigt, jedoch kann eine Vielzahl von unterschiedlichen Pumpenkammern vorstehend genannter Art vorgesehen sein.

Die in Figur 1 gezeigte Anordnung von Verdichter 16 und Verbraucher 20 ist nicht zwingend. Wesentlich ist die Tatsache, dass der Verdichter 16 und der Verbraucher mit dem gleichen Antriebstrang gekoppelt sind. Somit ist denkbar, dass der Verbraucher statt an den Antriebsstrang 18 an den Antriebsstrang 14 des Verbrennungsmotors 10 direkt gekoppelt ist.

Im Betrieb treibt der Verbrennungsmotor 10 den Verdichter 16 über den Antriebsstrang 14 an. In diesem Fall ist die Kupplungseinrichtung 12 im Eingriff, so dass das Antriebsdrehmoment des Verbrennungsmotors 10 an den Verdichter 16 übertragen beziehungsweise die Antriebsleistung des Verbrennungsmotors 10 an den Verdichter abgegeben wird. Dabei liefert der Verbrennungsmotor 10 eine Antriebsleistung, die sowohl für den Betrieb des Verdichters 16 als auch für den Betrieb des Verbrauchers 20 erforderlich ist, da der Verbraucher 20, wie in Figur 1 gezeigt, an den Verdichter 16 gekoppelt ist.

Zum Senken des Leistungsverbrauchs des Verbrennungsmotors 10 kann die Kupplungseinrichtung 12 ebenso ausgekuppelt werden, wenn die Betriebsbedingungen des Kraftfahrzeugs bzw. die Randbedingungen dies erlauben und der Kompressor nicht anzutreiben ist. Im Folgenden wird jedoch von einer im Eingriff und somit ein Antriebsdrehmoment übertragenden Kupplungseinrichtung 12 ausgegangen.

Der Verdichter 16 führt im Betrieb einen Expansionsvorgang und einen Verdichtungsvorgang aus. Im Falle eines Hubkolbenkompressors führt dieser beispielsweise eine Hubbewegung eines Kolbens (nicht gezeigt) aus, durch die beispielsweise Druckluft für ein Druckluftsystem, das nicht näher erläutert wird, beschafft wird. Während des Verdichtungsvorgangs, das heißt, während der Kolben von einem unteren Totpunkt in Richtung eines oberen Totpunkts voranschreitet, verhält sich der Verlauf des/der für den Verdichterbetrieb erforderlichen Drehmoments/Leistung im Antriebsstrang 14, wie nachstehend erläutert wird. Zur Vereinfachung der Erläuterung wird im Folgenden von einem Hubkolbenkompressor mit nur einem Kolben/Zylinder ausgegangen.

Bewegt sich der Kolben des Verdichters 16 von dem unteren Totpunkt in Richtung des oberen Totpunkts, wird das in einem Zylinder befindliche Fluid komprimiert. Der Druck im Zylinder nimmt dabei zu. Mit der Druckzunahme im Zylinder steigt das dem Verdichter 16 zugeführte, für den Verdichterbetrieb erforderliche Drehmoment, das von dem Verbrennungsmotor 10 geliefert wird, ebenso an. Ab einem bestimmten Kolbenhub, d.h. bei einem bestimmten zurückgelegten Hubweg beim Kompressionsvorgang, beginnt sich der Druck im Zylinder stärker zu erhöhen. Dies führt zu einer Drehmomentspitze im Verlauf des für den Verdichterbetrieb erforderlichen Drehmoments. Um diese Drehmomentspitze des Verlaufs des für den Verdichterbetrieb erforderlichen Drehmoments in dem Antriebstrang 14 zu kompensieren, ist erfindungsgemäß der Verbraucher 20 an dem Antriebstrang 18 des Verdichters 16 derart vorgesehen, der er seine Leistungsaufnahme absenkt, so wie der Verlauf des für den Verdichterbetrieb erforderlichen Drehmoments im Verdichtungsvorgang einen Schwellenwert übersteigt oder ein Spitzenmoment erreicht. Dadurch wird insgesamt das Motorantriebsdrehmoment in dem Antriebstrang 14, das eine Überlagerung aus dem für den Verdichterbetrieb erforderlichen Drehmoment und dem Drehmoment des Verbrauchers 20 darstellt, im Wesentlichen konstant gehalten bzw. die vorstehend genannte Leistungs- bzw. Drehmomentspitze wird aufgrund der verringerten Leistungsaufnahme des Verbrauchers kompensiert. Folglich wird ein nahezu gleichmäßiger beziehungsweise konstanter Verlauf des vom Verbrennungsmotor 10 übertragenen Drehmoments beziehungsweise der abgegebenen Antriebsleistung des Verbrennungsmotors 10 zur Verfügung gestellt.

Um die Leistungsaufnahme des Verbrauchers 20 im Verdichtungstakt des Verdichters 16 zu verringern, betreibt der Verbraucher 20, der in der besonderen Ausführung die Lenkhilfepumpe oder Hydraulikpumpe ist, somit während des Verdichtungsvorgangs und ab überschreiten des Schwellenwerts genau die Pumpenkammer, die keine Pumpleistung erbringt, wodurch die Leistungsaufnahme der Hydraulikpumpe herabgesetzt wird. Folglich wird der Verlauf des Drehmoments beziehungsweise der Antriebsleistung des Verbrennungsmotors 10 konstant gehalten beziehungsweise die Drehmomentspitze wird kompensiert. Befindet sich der Verdichter 16 nicht mehr in dem Verdichtungsvorgang, sondern beispielsweise in dem Expansionsvorgang, bei dem der Verlauf der für den Verdichterbetrieb erforderlichen Leistung den vorbestimmten Schwellenwert unterschreitet bzw. keine Spitzenleistung durchläuft, betreibt die Pumpe die Pumpenkammer 22, die eine Pumpleistung erbringt und fördert entsprechend das Fluid, wodurch die Leistungsaufnahme des Verbrauchers 20-erhöht wird.

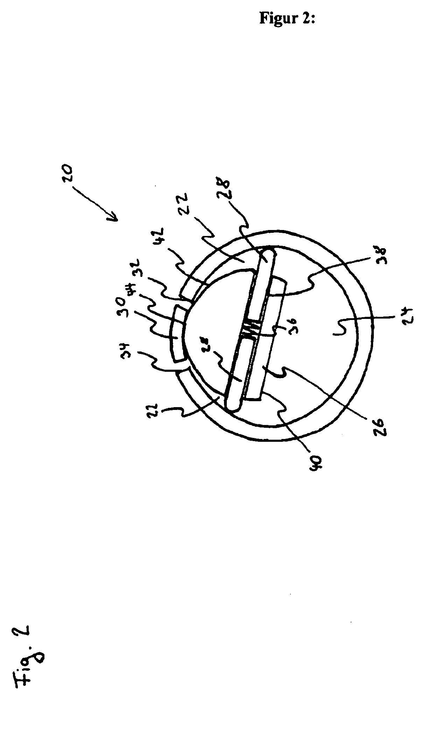

Figur 2 zeigt eine besondere Ausführungsform des Verbrauchers 20 gemäß Figur 1. In Figur 2 ist die den Verbraucher 20 ausbildende Hydraulikpumpe oder Lenkhilfepumpe eine in einem Radialschnitt dargestellte, erfindungsgemäße Flügelzellenpumpe, die derart modifiziert ist, dass sie die vorstehend genannten unterschiedlichen Betriebe, d.h. einen eine Pumpleistung erbringenden Betrieb und einen keine Pumpleistung erbringenden Betrieb, ausführen kann. In Figur 2 ist die Flügelzellenpumpe mit 3 Pumpenkammern gezeigt, jedoch können ebenso modifizierte Flügelzellenpumpen mit lediglich 2 oder mehr als 3 Pumpenkammern der vorstehend genannten Art verwendet werden.

Die Flügelzellenpumpe weist einen Rotor 26 und einen Stator 30 auf. Der Rotor 26 ist im Wesentlichen zylindrisch ausgebildet und drehbar um seine Längsachse in dem Stator 30 gelagert. An einer ersten Seite 40 ist der Rotor 26 abgeflacht, d.h. dass an der ersten Seite 40, gesehen in der Axialrichtung bzw. in Richtung der Rotationsachse, ein Kreisabschnitt bzw. Kreissegment von dem Rotor 26 abgetragen ist, wobei der Rotor 26 an dieser Seite einen abgeflachten Abschnitt ausbildet. Weiterhin berührt der Rotor 26 mit einem Berührungsabschnitt 44 den Stator 30, der sich an einer zweiten Seite 42 des Rotors 26 befindet, die der Seite 40 des Rotors 26 abgewandt ist.

In dem Rotor 26 ist eine Führung 38 ausgebildet, die senkrecht zu dessen Rotationsachse und durch den Rotor 26 verläuft. Bevorzugt verläuft diese Führung 38 durch die Rotationsachse, so dass die erste Seite 40 bezüglich der Führung 38 den abgeflachten Abschnitt des Rotors 26 und die zweite Seite 42 bezüglich der Führung 38 den Berührungsabschnitt 44 des Rotors 26 aufweist. In der Führung 38 sind zwei Drehschieber 28 angeordnet, die mittels einer Feder 36 gehalten und gegen den Stator 30 vorgespannt werden. Die Feder ist in dem Rotor 26 fest fixiert. Daher bildet der Rotor 26 zusammen mit dem Stator 30, dem Berührungsabschnitt 44 von Stator 30 und Rotor 26 und den Drehschiebern 28 unterschiedliche Pumpenkammern 22 und 24 aus.

In dem Stator befindet sich eine Ausstoßöffnung 32 und eine Ansaugöffnung 34, welche jeweils ein Fluid ausstoßen und ansaugen. Wie aus Figur 2 ersichtlich ist, wird der Raum innerhalb des Stators 30 durch den Rotor 26, insbesondere den Berührungsabschnitt 44 des Rotors 26 mit dem Stator 30, und die Drehschieber in unterschiedliche Pumpenkammern 22 und 24 aufgeteilt. Die Pumpenkammer 24 ist dabei eine keine Pumpleistung erbringende Pumpenkammer, wohingegen die Pumpenkammern 22 eine Pumpleistung erbringende Pumpenkammern sind. Dies wird durch den vergrößerten Kammerraum aufgrund der Materialabtragung bzw. Abflachung beziehungsweise dem abgeflachten Abschnitt des Rotors 26 bewirkt.

Im Betrieb dreht sich der Rotor 26 um dessen Rotationsachse, beispielsweise in rechtsdrehender Richtung, das heißt gegen den Uhrzeigersinn. Dadurch, dass die Drehschieber 28 fortwährend mit dem Stator 30 aufgrund der Vorspannung der Feder 36 in Berührung stehen und einen dazwischen liegenden Spalt abdichten, wird das in der Pumpenkammer 22 befindliche Fluid zu der Ausstoßöffnung 32 gefördert. Weiterhin saugt die andere Pumpenkammer 22 über die Ansaugöffnung 34 das Fluid aufgrund der Drehbewegung des Rotors 26 an. Die Pumpenkammer 24 hingegen ist durch die besondere Ausgestaltung des Rotors 26 derart ausgebildet, dass sie keine Pumpleistung erbringen kann. Dies rührt daher, dass der Rotor 26 bei entsprechender Lage, d.h. bei der Lage, in der die abgeflachte Abschnitt des Rotors 26 der Ausstoßöffnung 32 und Ansaugöffnung 34 zugewandt ist, keine Berührung mit dem Stator 30 zwischen der Ausstoßöffnung 32 und der Ansaugöffnung 34 herstellen kann, d.h. der Rotor 26 weist an der die Pumpenkammer 24 ausbildenden Seite keinen Berührungsabschnitt 44 auf. Dadurch stehen die Ausstoßöffnung 32 und die Ansaugöffnung 34 in der Pumpenkammer 24 bei entsprechender Lage des Rotors 26 permanent in Verbindung, wodurch kein Fluid gefördert wird und demnach auch keine Pumpleistung erbracht wird. Dementsprechend ist die Leistungsaufnahme der Pumpe stark reduziert.

Erfindungsgemäß wird nun der Betrieb dieser Pumpenkammer 24 zeitlich mit dem Verdichtungsvorgang des Verdichters 16 ab Überschreiten des vorstehend genannten Schwellenwerts in Übereinstimmung gebracht beziehungsweise synchronisiert. Somit erbringt die Pumpe keine Pumpleistung, während der Verlauf der für den Verdichterbetrieb erforderlichen Antriebsleistung den Schwellenwert überschritten hat. Somit wird der gleichförmige Drehmomentverlauf der Flügelzellenpumpe über einen gewissen Kurbelwinkel des Rotors 26 deutlich reduziert. Damit erfolgt die Reduzierung an der Stelle des an den Verdichter 16 übertragenen Maximalmoments, wobei ein gleichmäßiger Gesamtdrehmomentverlauf beziehungsweise ein gleichmäßiger Gesamtantriebsleistungsverlauf im Antriebstrang 14 des Verbrennungsmotors 10 gewährleistet beziehungsweise konstant gehalten wird, wie vorstehend erläutert ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Verbrennungsmotor
- 12: Kupplungseinrichtung
- 14: Antriebsstrang
- 16: Verdichter
- 18: Antriebsstrang
- 20: Verbraucher
- 22: Pumpenkammer
- 24: Pumpenkammer
- 26: Rotor
- 28: Drehschieber
- 30: Stator
- 32: Ausstoßöffnung
- 34: Ansaugöffnung
- 36: Feder
- 38: Führung
- 40: erste Seite des Rotors
- 42: zweite Seite des Rotors
- 44: Berührungsabschnitt des Rotors

## Patentansprüche

1. System mit einem Verdichter (16) und einem Verbraucher (20), die an einen Antriebsstrang (14, 18) gekoppelt sind und aus diesem Energie beziehen, **dadurch gekennzeichnet, dass** der Verdichter (16) im Betrieb einen Expansionstakt und einen Verdichtungstakt ausführt, wobei der Verbraucher (20) Mittel umfasst, die dazu vorgesehen sind, eine Aufnahme einer ihm von dem Antriebsstrang (14, 18) zur Verfügung gestellten Leistung in Abhängigkeit von einer für einen Verdichterbetrieb erforderlichen, von dem Antriebsstrang (14, 18) dem Verdichter (16) zugeführten Leistung im Verdichtungstakt abzusenken, wenn die für den Verdichterbetrieb erforderliche Leistung im Verdichtungstakt einen Schwellenwert übersteigt oder eine Leistungsspitze erreicht, so dass ein Verlauf der Gesamtleistung aus der für den Verdichterbetrieb erforderlichen Leistung und der durch den Verbraucher (20) aufgenommenen Leistung während eines Verdichtungstaktes des Verdichters (16) im Wesentlichen konstant ist.

2. System gemäß Anspruch 1, **dadurch gekennzeichnet, dass** der Verbraucher (20) geeignet ist, seine Aufnahme der ihm zur Verfügung gestellten Leistung zu verringern, wenn ein Verlauf der für den Verdichterbetrieb erforderlichen Leistung über einen vorbestimmten Schwellenwert ansteigt oder einen Bereich eines Leistungsmaximums errecht.

3. System gemäß Anspruch 2, **dadurch gekennzeichnet, dass** die für den Verdichterbetrieb erforderliche Leistung in einem Verdichtungsvorgang oder einem Verdichtungstakt den Schwellenwert übersteigt oder ihr Leistungsmaximum erreicht.

4. System gemäß einem der vorangehenden Ansprüche, **dadurch gekennzeichnet, dass** der Verbraucher (20) eine Pumpe, insbesondere eine Lenkhilfepumpe oder eine Hydraulikpumpe, umfasst, die geeignet ist, einen eine Pumpleistung erbringenden Betrieb, bei dem die Aufnahme der zur Verfügung gestellten Leistung erfolgt, und einen keine oder in Abhängigkeit von Betriebseigenschaften des Verdichters (16) verringerte Pumpleistung erbringenden Betrieb, bei dem keine oder eine verringerte Aufnahme der zur Verfügung gestellten Leistung erfolgt, auszuführen.

5. System gemäß Anspruch 4, **dadurch gekennzeichnet, dass** die Pumpe eine Verdrängungspumpe, insbesondere eine Flügelzellenpumpe oder eine Kolbenpumpe, ist, bei der zumindest eine keine oder in Abhängigkeit von Betriebseigenschaften des Verdichters (16) verringerte Pumpleistung erbringende Pumpenkammer (22) ausgebildet ist, mit der in einem Pumpenbetrieb keine oder eine verringerte Aufnahme der zur Verfügung gestellten Leistung erfolgt, wobei die Pumpe weiterhin zumindest eine eine Pumpleistung erbringende Pumpenkammer (24) aufweist, mit der in einem Pumpenbetrieb die Aufnahme der zur Verfügung gestellten Leistung erfolgt.

6. System gemäß einem der vorangehenden Ansprüche, **dadurch gekennzeichnet, dass** der Verdichter (16) von einem Antriebstrang (14) eines Verbrennungsmotors (10) und der Verbraucher (20) von einem Antriebsstrang (18) des Verdichters (16) angetrieben wird, wobei optional eine Kupplungseinrichtung (12) in dem Antriebsstrang (14) des Verbrennungsmotors (10) angeordnet ist.

7. Pumpe, die zumindest eine während eines Pumpenbetriebes eine Pumpleistung erbringende Pumpenkammer (22) aufweist, wobei die Pumpe weiterhin zumindest eine Pumpenkammer (24) aufweist, die während des Pumpenbetriebes keine Pumpleistung erbringt, und wobei die Pumpe einen im Inneren der Pumpe angeordneten Rotor (26) und einen eine Ausstoßöffnung (32) und eine Ansaugöffnung (34) aufweisenden Stator (30) umfasst, **dadurch gekennzeichnet, dass** die während des Pumpbetriebs keine Pumpleistung erbringende Pumpenkammer (24) rotorseitig von dem in diesem Bereich einen abgeflachten Abschnitt aufweisenden Rotor (26) begrenzt wird, dass der Rotor (26) keine Berührung mit dem Stator (30) zwischen der Ausstoßöffnung (32) und der Ansaugöffnung (34) herstellt, wenn der abgeflachte Abschnitt des Rotors (26) der Ausstoßöffnung (32) und der Ansaugöffnung (34) zugewandt ist.

## Claims

1. System with a compressor (16) and a consumer (20) which are coupled to a drive train (14, 18) and extract energy therefrom, **characterized in that** the compressor (16) during operation performs an expansion stroke and a compression stroke, the consumer (20) comprising means which are provided for reducing in the compression stroke an absorption of a power provided thereto by the drive train (14, 18) depending on a power which is required for compressor operation and supplied from the drive train (14, 18) to the compressor (16), if the power required for compressor operation in the compression stroke exceeds a threshold value or reaches a peak power, so that a characteristic of the total power consisting of the power required for compressor operation and the power absorbed by the consumer (20) is substantially constant during a compression stroke of the compressor (16).

2. System according to Claim 1, **characterized in that** the consumer (20) is suitable for reducing its absorption of the power provided thereto, when a characteristic of the power required for compressor operation rises above a predetermined threshold value or reaches a maximum power range.

3. System according to Claim 2, **characterized in that** the power required for compressor operation in a compression cycle or a compression stroke exceeds the threshold value or reaches its maximum power.

4. System according to one of the preceding claims, **characterized in that** the consumer (20) comprises a pump, in particular a power steering pump or a hydraulic pump, which is suitable for carrying out an operation providing a pumping power, in which the power provided is absorbed, and an operation producing no pumping power or reduced pumping power depending on the operating conditions of the compressor (16), in which no absorption or a reduced absorption of the power provided takes place.

5. System according to Claim 4, **characterized in that** the pump is a displacement pump, in particular a vane pump or a piston pump, in which at least one pump chamber (22) is formed, providing no pumping power or reduced pumping power depending on the operating conditions of the compressor (16), by means of which in a pumping operation no absorption or reduced absorption of the power provided takes place, the pump further comprising at least one pump chamber (24) providing a pumping power, by means of which in a pumping operation the power provided is absorbed.

6. System according to one of the preceding claims, **characterized in that** the compressor (16) is driven by a drive train (14) of an internal combustion engine (10) and the consumer (20) is driven by a drive train (18) of the compressor (16), optionally a clutch device (12) being arranged in the drive train (14) of the internal combustion engine (10).

7. Pump which comprises at least one pump chamber (22) providing a pumping power during a pumping operation, the pump further comprising at least one pump chamber (24), which during the pumping operation provides no pumping power, and the pump comprising a rotor (26) arranged inside the pump and a stator (30) having a discharge opening (32) and an intake opening (34), **characterized in that** the pump chamber (24) providing no pumping power during the pumping operation is delimited on the rotor side by the rotor (26) having a flattened portion in this region, **in that** the rotor (26) produces no contact with the stator (30) between the discharge opening (32) and the intake opening (34), when the flattened portion of the rotor (26) faces the discharge opening (32) and the intake opening (34).

## Revendications

1. Système comprenant un compresseur (16) et un dispositif (20) consommateur, qui sont couplés à une chaîne (14, 18) d'entraînement et en tire de l'énergie, **caractérisé en ce que** le compresseur (16) effectue en fonctionnement une phase de détente et une phase de compression, dans lequel le compresseur (20) comprend des moyens qui sont prévus pour diminuer dans la phase de compression une absorption d'une puissance, qui est mise à sa disposition par la chaîne (14, 18) d'entraînement, en fonction d'une puissance apportée au compresseur (16) par la chaîne (14, 18) d'entraînement et qui est nécessaire pour un fonctionnement du compresseur, lorsque la puissance nécessaire pour le fonctionnement du compresseur dépasse une valeur de seuil dans la phase de compression ou atteint une pointe de puissance, de sorte qu'une courbe de la puissance totale, composée de la puissance nécessaire pour le fonctionnement du compresseur et de la puissance absorbée par le dispositif (20) consommateur, soit sensiblement constante pendant une phase de compression du compresseur (16).

2. Système suivant la revendication 1, **caractérisé en ce que** le dispositif (20) consommateur est propre à diminuer son absorption de la puissance qui est mise à sa disposition, lorsqu'une courbe de la puissance nécessaire pour le fonctionnement du compresseur dépasse une valeur de seuil déterminée à l'avance ou atteint une plage d'un maximum de puissance.

3. Système suivant la revendication 2, **caractérisé en ce que** la puissance nécessaire pour le fonctionnement du compresseur dépasse la valeur de seuil ou atteint sa valeur maximum dans une opération de compression ou dans une phase de compression.

4. Système suivant l'une des revendications précédentes, **caractérisé en ce que** le dispositif (20) consommateur comprend une pompe, notamment une pompe d'assistance à la direction ou une pompe hydraulique, qui est propre à effectuer un fonctionnement apportant une puissance de pompage, pour laquelle s'effectue l'absorption de la puissance mise à disposition, et un fonctionnement n'apportant pas de la puissance de pompage ou apportant une puissance de pompage diminuée en fonction des propriétés de fonctionnement du compresseur (16), fonctionnement dans lequel une absorption de la puissance mise à disposition n'a pas lieu ou une absorption de la puissance mise à disposition a lieu d'une manière diminuée.

5. Système suivant la revendication 4, **caractérisé en ce que** la pompe est une pompe volumétrique, notamment une pompe à palette ou une pompe à piston, dans laquelle est constituée une chambre (22) de pompe n'apportant pas de puissance de pompage ou apportant une puissance de pompage diminuée en fonction des propriétés du fonctionnement du compresseur (16), chambre par laquelle il ne se produit pas en fonctionnement de pompage une absorption de la puissance mise à disposition ou il se produit une absorption diminuée de la puissance mise à disposition, la pompe ayant en outre au moins une chambre (24) de pompe apportant une puissance de pompage, par laquelle dans un fonctionnement en pompage l'absorption de la puissance mise à disposition a lieu.

6. Système suivant l'une des revendications précédentes, **caractérisé en ce que** le compresseur (16) est entraîné par une chaîne (14) d'entraînement d'un moteur (10) à combustion et le dispositif (10) consommateur est entraîné par une chaîne (18) d'entraînement du compresseur (16), un dispositif (12)

7. Pompe qui a au moins une chambre (22) de pompe apportant une puissance de pompage pendant un fonctionnement de la pompe, la pompe ayant au moins une chambre (24) de pompe qui n'apporte pas de puissance de pompage pendant le fonctionnement de la pompe et dans laquelle la pompe comprend un rotor (26) disposé à l'intérieur de la pompe et un stator (30) ayant une ouverture (32) de refoulement et une ouverture (34) d'aspiration, **caractérisée en ce que** la chambre (24) de pompe n'apportant pas de puissance de pompage pendant que la pompe fonctionne, est délimitée du côté du rotor par le rotor (26) qui a dans cette zone un segment aplati, **en ce que** le rotor (26) ne ménage pas de contact avec le stator (30) entre l'ouverture (32) de refoulement et l'ouverture (34) d'aspiration, lorsque le segment aplati du rotor (26) est tourné vers l'ouverture (32) de refoulement et vers l'ouverture (34) d'aspiration.
